# EUROPEAN PATENT SPECIFICATION

(11) **EP 1 050 214 B1**
(45) Date of publication and mention of the grant of the patent: **13.10.2004**
(21) Application number: 00201624.4
(22) Date of filing: 05.05.2000
(51) Int. Cl.: A23G 1/18, A23G 1/04

(54) **Tempering column**
Temperiereinrichtung
Appareil de conditionnement

(30) Priority: 05.05.1999 EP 99201399
(43) Date of publication of application: 08.11.2000
(73) Proprietor: AASTED-MIKROVERK APS, 3520 Farum (DK)
(72) Inventor: Haslund, Henning, 4632 Bjaeverskov (DK)
(74) Representative: Heiden, Finn

(56) References cited:
- EP-A- 0 289 849
- EP-A- 0 806 149
- EP-A- 0 872 187
- CH-A- 321 852
- US-A- 1 375 210
- US-A- 2 677 942
- US-A- 4 279 295
- US-A- 4 648 315

## Description

### Technical field

The invention concerns an apparatus for continuous tempering of a cacao-butter-containing or other fat-containing, chocolate-like mass, comprising a primary cooling section, a subsequent secondary cooling section in which crystals are created in the mass, and a final reheating section.

For many years, tempering apparatuses have been used extensively for treatment of a great variety of chocolate-like masses. Before tempering, the chocolate or like mass is warmed up to around 40-60°C. After tempering, the mass typically has a temperature of around 29-33°C, whereafter it is being used for many purposes, such as being filled in moulds, deposited on top of other articles, etc.

The aim of the tempering process is briefly spoken, to create a mass with a portion and a type of crystals, that satisfies, that the chocolate-like mass for sure will solidify to a state, which results in a "high" quality article. To the skilled person, a "high quality" article brings along a glossy surface, long time storage capacity without diffusion of fat content to the surface, crispy break, and of course good taste as well. Experience has gained the knowledge to the skilled person, that such high quality is heavily dependent upon the type of crystals created in the mass during tempering, as well as the actual portion of such crystals, either in relation to the weight of the total mass, or in relation to the fat content of the mass.

Extensive scientific research has since long provided the teaching, that of the several available crystal forms, which may be performed during tempering of a chocolate-like mass, it is the stable β-crystals only, which for sure provides high quality chocolate-like mass. Of the different β-crystals, it is particularly advantageous to obtain β-5 crystals or higher crystals of this type

### Prior art

Mixing and stirring elements are typically provided as propellers with two opposite blades. The blades may be provided with elevations or recesses on one or both sides. These elevations or recesses may serve three purposes. They serve to mix and stir the chocolate-like mass to make it homogeneous. They may serve to direct the liquid chocolate like mass in direction either towards the periphery or the centre of the mass chambers. They may also serve to provide shear-force to the mass. The shear force is the product of the viscosity of the mass and the shear gradient. The shear gradient is the speed difference between the two opposing surfaces divided by the clearance between them. The unit of the shear gradient is sec⁻¹.

It has been determined that a shear gradient above 50 sec⁻¹ should be provided in order to obtain a satisfactory shear force. The shear force exerted on the chocolate-like mass aids in the formation of stable β-5 crystals, more specifically by transforming the β-4 crystals into β-5 crystals. This transformation can also be obtained by elevation of the temperature, but through the shear force, the same effect may be obtained without elevating the temperature.

For a traditional propeller mixer, only the elevations add to the shear gradient. Thereby, typically less than 5 % of the area wiped by the propeller is active in providing shear force.

Mixing and stirring elements that are essentially disc-shaped are also known in the prior art. The known type of disc-shaped mixing and stirring elements allow for the passage of chocolate-like mass at the periphery either through openings in the elements or simply because of the presence of a clearing between the periphery of the elements and the interior diameter of the cylindrical tempering column.

Such an apparatus is known from US-A-4 648 315, which discloses incisions adapted for the flow of chocolate mass at the periphery of the discs. The discs are free from any holes for the flow of chocolate mass.

### Core of the invention

It is the purpose of the present invention to provide a tempering unit with higher efficiency than known by the prior art.

This task is solved by providing an apparatus having a cylindrical tempering column comprising a cooling stage and a subsequent reheating stage for continuous tempering of a fat-containing, chocolate-like mass pumped therethrough, which tempering column further comprise a plurality of interconnected mass chambers, which are separated by intermediary heat exchange chambers adapted to absorb heat from the mass chambers or to submit heat to the mass chambers during flow of cooling media through the cooling stage or flow of heating media through the reheating stage, respectively, and which mass chambers further comprise mixing and stirring elements, which are rotated by the action of a common, central drive shaft arranged in the column, whereby said mixing and stirring elements comprise a disc shaped part.

Thereby, it has been determined that non-active zones of the area wiped by the stirring elements can be transformed into active zones for shearing or for the flow of mass.

The mixing and stirring elements extend essentially all the way to the internal wall of the cylindrical tempering column, and the peripheral part of said mixing and stirring elements is free from holes or incisions for the flow of chocolate-like mass. Thereby it is obtained that the peripheral part of the stirring element, which has the largest speed difference, may be used for exerting shear force, instead of providing flow from one side of the element to the other.

Furthermore, holes for the flow of chocolate-like mass are provided in the mixing and stirring elements. These holes are provided in an area adjacent the central drive shaft. By providing the holes form the flow of mass in the centre of the disc-shaped stirring element, this part of the element, which will typically not add to the shear force, is used for another purpose, i.e. the flow of mass from one side of the element to the other.

### Detailed description

Figure 1 shows schematically a vertical section of the tempering column of a tempering apparatus.

Figure 2 provides a schematic view of one of the sides of the stirring and mixing element.

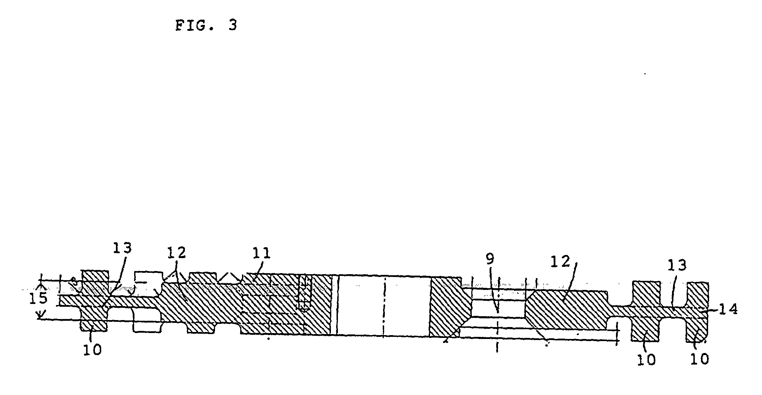

Figure 3 provides a schematic cross section of the stirring and mixing element.

Figure 4 provides a schematic cross section of a tapering stirring and mixing element.

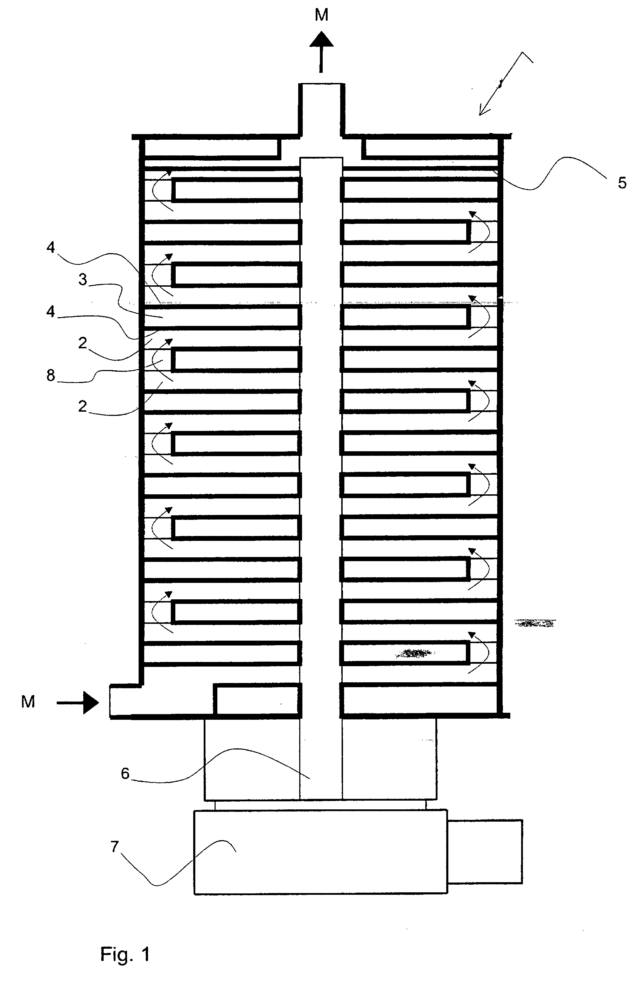

The tempering column 1 shown in fig. 1 has a circular vertical section, and comprises a plurality of alternating mass chambers 2 and intermediary medium chambers 3 for cooling or heating medium, which chambers 2, 3 are separated by intermediary, disc-shaped walls 4. In each mass chamber 2 are preferably arranged a mixing and stirring means 5, whereof only one is shown for clarity, and which mixing and stirring means 5 are rotated by means of a central, vertical shaft 6 driven by a motor 7.

By means of for instance a pump, which is not shown, the mass is forced to flow through the tempering column 1 with a general vertical direction M, which by the disclosed embodiment is from the bottom to the top. In each mass chamber 2, the mass is subjected to a stirring means 5, as well as to cooling or a heating effected to the mass by the cooling or heating medium in question flowing through the adjacent chamber 3. The mass chambers are interconnected by openings 8, which preferably are arranged at the periphery of the column 1.

Such a tempering column has been known for more than half a century, and is today the most widely used heat exchange means for tempering of chocolate-like mass. It is furthermore well-known, that the best performance of such a tempering column is achieved, when the cooling or heating medium flow continuously through the chambers and when the stirring means 5 exerts shearing forces as well as a force-full stirring to the mass.

Though the inventive method and apparatus is explained in relation to the above mentioned type of tempering column only, the invention may apply for every other type of tempering system. Other systems may comprise a tempering column, which is horizontal or inclined or even partitioned in several sections, or the column may be substituted by vessels or tubes.

During operation, molten chocolate-like mass (M) is pumped into the tempering unit at the bottom (indicated by an arrow). The chocolate-like mass then passes through a series of interconnected mass chambers 3. When the chocolate-like mass enters the first mass chamber 2, it is subjected to shear force, it is mixed by the disc-shaped rotating stirring and mixing element 5 and it is moved to the centre of the disc where the mass flows through openings 9 to the part of the mass chamber above the element. In the compartment above the element 5, the mass is further subjected to shear force, mixed, and stirred through the rotation of the element. The mass then moves on to the next mass chamber by passing through opening 8 to the successive mass chamber where the mass passes through openings in the element as in the first chamber. In this way, the mass is subjected to shearing, mixing, and stirring in a meander-like pattern through the tempering column. In the mass chambers the mass is moved in a helical pattern towards the centre below the mixing and stirring elements 5, and towards the periphery with the openings 8 above the elements.

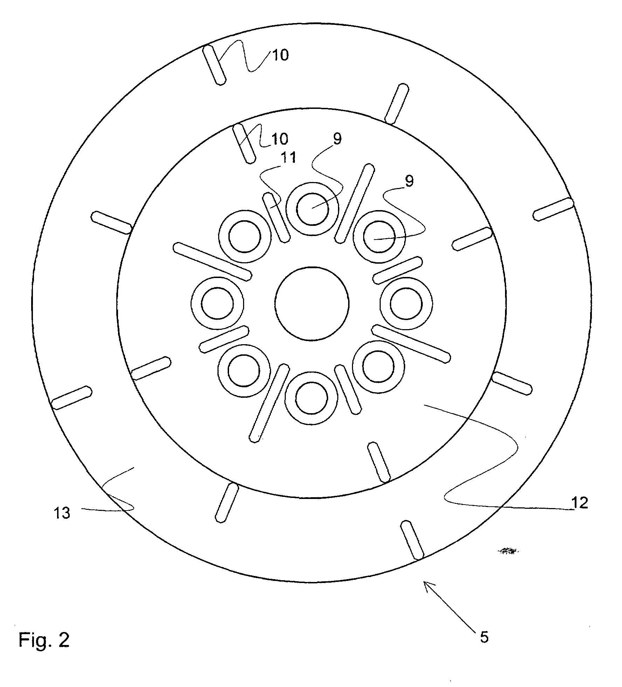

One embodiment of the inventive stirring and mixing element is disclosed in figure 2. The element essentially has the shape of a disc. Important is that the element has a size so it fits exactly into the cylindrical column. Thereby the only passage of chocolate-like mass from the lower to the upper side is through openings 9 in the element 5. The invention does not exclude the possibility that some chocolate may escape through the small tolerance between the internal wall of the tempering column and the stirring element but this does not form part of the inventive idea.

Preferably, the openings are provided in the area close to the centre of the stirring element. Thereby is obtained that the chocolate-like mass is subjected to stirring and shearing in a large part of the mass chamber, since the chocolate-like mass has to pass from the peripheral opening below the stirring element all the way to the centre of the stirring element before it can actually pass the element.

The number as well as the size and shape of the openings may vary within the inventive idea as long as they allow for passage of the chocolate. Preferably, there are an equal number of openings placed symmetrically around the driving shaft. The cross sectional area of the openings together with the pump capacity determines the speed at which the chocolate-like mass can be passed through the tempering column.

By providing the passage for the chocolate-like mass adjacent the centre of a disc-shaped stirring and mixing element an increased efficiency is obtained. Normally, the central part of the mixing element is less efficient in providing mixing and shearing force to the chocolate-like mass, since the speed is lower than at the periphery. By thus using the central zone for passage of chocolate-like mass rather than for mixing, an improved mixing and shearing efficiency is obtained. The occurrence of zones of stationary or almost stationary mass is more or less avoided according to the invention.

The edge of the openings may be provided with a taper to facilitate the passage of the chocolate-like mass. The taper may also increase the speed during passage, which further adds to the shearing force applied to the mass.

The mixing element is furthermore provided with small elevations 10 or mixing blades 11. Preferably, these elevations and blades are elongate and placed along the radius of the mixing element. The mixing blades may be of identical size or may vary in size within the invention. Similarly, the elevations 10 may also vary in size or be of identical size. One purpose of these elevations and blades is to wipe the entire surface of the mass chamber 2, so that no area is left undisturbed by the mixing element. A further purpose is to provide shear force to the chocolate-like mass. The elevations and mixing blades may typically constitute from 1 to 15 % of the surface area wiped by the stirring element, preferably from 2 to 10 %, more preferably from 4-6 %.

The invention does not exclude the possibility that the elevations and mixing blades are given a shape such that they transport the chocolate-like mass towards the centre below the mixing element and towards the periphery above the mixing element. Such an effect could be obtained by providing the mixing blades with a convex, curved extension in direction outwardly towards the peripheral cylinder wall below the element and an opposite curvature on the upper side.

According to an especially preferred embodiment of the invention, the mixing and stirring element comprises two parts, a peripheral part 13 having a thickness considerably smaller than the thickness of a central part 12. Thereby is obtained, that a large fraction of the total area provides shear force to the chocolate-like mass. The shear force is determined by the product of the viscosity of the mass and the shear gradient. The viscosity of the mass is given by the nature of the mass and the tempering viscosity. The shear gradient is the speed gradient between the two opposing surfaces divided by the distance between them.

The unit of the shear gradient is sec⁻¹.

It has been determined that a shear gradient above 50 sec⁻¹ should be provided in order to obtain a satisfactory shear force. The speed gradient varies with the radius of the rotating mixing element 11, being lower closer to the centre. By giving the mixing element a larger thickness in the central part 12 the gap between the mixing element and the mass chamber is lowered and this part of the element actually adds to the shear force exerted on the chocolate-like mass. In the peripheral part 13, the speed gradient is larger and thereby this area can add to the shear force even though the clearance between the mixing element and the mass chamber is larger than in the central part. A mixing element according to this embodiment may have an active surface, i.e. a surface adding to the shear force, comprising more than 25% of the area, wiped by the mixing element.

The actual thickness of the different parts of the stirring and mixing element may vary within the inventive idea. The thickness 15 of the peripheral part 13 may typically constitute 10 to 50 % of the thickness 14 of the central part, more preferably from 20 to 35 %.

The ratio of the radius of the peripheral part of the stirring element to the radius of the central part may vary within the inventive idea.

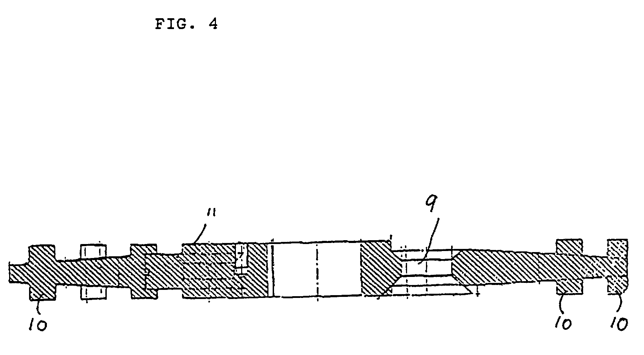

According to another embodiment of the invention disclosed schematically in figure 4, the peripheral part 13 of the mixing element tapers towards the periphery. Thereby, the thickness of the peripheral part 13 is the same as the thickness of the central part 12 at their interface, but at the periphery, the cross section is considerably smaller. According to this embodiment, the peripheral part, which tapers, may constitute any possible fraction of the total radius of the stirring element. Thus, the disc-shaped stirring element may taper all the way from the central shaft to the periphery, or alternatively, only a part of the stirring element may taper. The taper could be linear, concave or convex but the invention is not restricted to any specific taper.

Surprisingly, it was determined that by this embodiment the fraction of the total surface of the mixer that adds to active shear gradient is increased even further. Thereby, the active surface may be well above 25 % of the area wiped by the mixing element.

The effect of increasing the active surface that exerts shearing force on the mass is to increase the overall efficiency of the tempering apparatus. An increased efficiency is also obtained by arranging the openings in the disc-shaped stirring element adjacent the central drive shaft, whereby this zone, which does not add to the active shearing is used for the flow of mass through the tempering unit. Thereby a higher amount of chocolate-like mass can be tempered per time unit than by the prior art. It has been determined experimentally that at least a 50 % increase in efficiency can be obtained by the present invention.

## Claims

1. Apparatus (1) having a cylindrical tempering column for continuous tempering of a cacao-butter-containing or other fat-containing, chocolate-like mass pumped therethrough, which tempering column further comprises a plurality of interconnected mass chambers (2), which are separated by intermediary heat exchange chambers (3), and which mass chambers (2) further comprise mixing and stirring elements (5), which are rotated by the action of a common, central drive shaft (6) arranged in the column, said mixing and stirring elements (5) comprise a disc shaped part,
**characterised in,**
**that** the disc shaped part extends all the way to the internal wall of the cylindrical tempering column so that the peripheral part of the disc shaped part (5) is free from holes or incisions for the flow of chocolate mass, and that holes (9) for the flow of chocolate-like mass are provided in an area adjacent the central drive shaft (6).

2. Apparatus according to claim 1, whereby an equal number of holes (9) are provided symmetrically around the central drive shaft (6).

3. Apparatus according to claim 1, whereby the disc-shaped mixing and stirring element (5) comprises a central part (12) and a peripheral part (13), and the central part (12) has a larger cross section (14) than the peripheral part (13).

4. Apparatus according to claim 1, whereby the peripheral part (13) tapers from its central diameter to its periphery.

5. Apparatus according to claim 1, whereby a plurality of mixing blades (11) and or elevations (10) are provided on at least one side of the mixing and stirring disc-shaped elements.

6. An apparatus according the claim 1, whereby the both sides of the mixing and stirring element comprise identical mixing blades (11) and elevations (10).

7. Apparatus according to claim 1, whereby the holes (9) tapered from the upper and lower side of the mixing and stirring element (5) towards its centre in at least part of the cross section of the element (5).

## Patentansprüche

1. Vorrichtung (1) die eine zylindrische Temperiersäule zur kontinuierlichen Temperierung einer schokoladenähnlichen Masse mit Bestandteilen von Kakaobutter oder anderen Typen Fett umfaßt, die dadurch gepumpt wird, welche Temperiersäule ferner eine große Anzahl von miteinander verbundenen Massenkammern (2) umfasst, die von zwischenliegenden Wärmeaustauschkammern (3) getrennt sind, und welche Massenkammern (2) ferner Misch- und Rührelemente (5) umfassen, die durch die Aktion einer gemeinsamen, zentralen Antriebswelle (6), in der Säule angeordnet, rotiert werden, welche Misch- und Rührelemente (5) einen scheibenförmigen Teil umfassen,
**dadurch gekennzeichnet**
**dass** sich der scheibenförmige Teil bis zu der inneren Wand der zylindrischen Temperiersäule erstreckt, so dass der periphere Teil vom scheibenförmigen Teil (5) frei von Durchlöcherungen oder Einkerbungen für Durchströmung der Schokoladenmasse ist, und dass Durchlöcherungen (9) für die Durchströmung der schokoladenähnlichen Masse im Gebiet nahe bei der zentralen Antriebswelle (6) vorgesehen sind.

2. Vorrichtung gemäß Anspruch 1, worin eine gleiche Anzahl von Durchlöcherungen (9) symmetrisch um die zentrale Antriebswelle (6) umher vorgesehen ist.

3. Vorrichtung gemäß Anspruch 1, worin das scheibenförmige Misch- und Rührelement (5) einen zentralen Teil (12) und einen peripheren Teil (13) umfaßt, und der zentrale Teil (12) eine größere Quersektion (14) als der periphere Teil (13) hat.

4. Vorrichtung gemäß Anspruch 1, worin der periphere Teil (13) spitzt zu von seinem zentralen Diameter bis zu seiner Peripherie.

5. Vorrichtung gemäß Anspruch 1, worin eine große Menge von Mischblättern (11) und oder Erhebungen (10) an mindestens eine Seite der scheibenförmigen Misch- und Rührelemente angeordnet ist.

6. Eine Vorrichtung gemäß Anspruch 1, worin die beiden Seiten vom Misch- und Rührelement identische Mischblätter (11) und Erhebungen (10) umfassen.

7. Vorrichtung gemäß Anspruch 1, worin Durchlöscherungen (9) von der oberen und unteren Seite vom Misch- und Rührelement (5) in Richtung seines Zentrums in mindestens einem Teil der Quersektion vom Element (5) zuspitzten.

## Revendications

1. Dispositif (1) ayant une colonne de tempérage cylindrique pour le tempérage continu d'une masse de type chocolat de matière beurre de cacao ou de matière grasse qui est pompée à travers, laquelle colonne de tempérage comprend de plus un grand nombre de chambres de masse (2) reliées entre elles, qui sont séparées par des chambres d'échangeur de chaleur intermédiaires (3), et lesquelles chambres de masse (2) comprennent de plus des éléments mélangeur/agitateur (5) qui sont tournés par l'action d'un arbre commun central (6) placé dans la colonne, lesquels éléments mélangeur/agitateur (5) comprennent de plus une partie en forme de disque
**caractérisé en ce que**
la partie en forme de disque s'étend tout au long jusqu'à la paroi intérieure de la colonne de tempérage de sorte que la partie périphérique de la partie en forme de disque (5) soit libre d'ouvertures de passage ou de cuvettes pour l'écoulement de la masse de chocolat, et que les ouvertures de passage (9) soient prévues dans une espace tout près de l'arbre d'entraînement centrale (6).

2. Dispositif selon la revendication 1, dans lequel un nombre d'ouvertures de passage (9) égal est prévu par symétrique à l'entour de l'arbre d'entraînement centrale (6).

3. Dispositif selon la revendication 1, dans lequel l'élément mélangeur/agitateur (5) en forme de disque comprend une partie centrale (12) et une partie périphérique (13), et la partie centrale (12) a une section transversale (14) plus grande que la partie périphérique (13).

4. Dispositif selon la revendication 1, dans lequel la partie périphérique aiguise de son diamètre central jusqu'à sa périphérie.

5. Dispositif selon la revendication 1, dans lequel un grand nombre d'ailes mélangeur (11) et ou d'élévations (10) est prévu au moins sur un côté des éléments mélangeur/agitateur en forme de disque.

6. Dispositif selon la revendication 1, dans lequel les deux côtés des éléments mélangeur/agitateur comprennent des ailes mélangeur (11) et ou des élévations (10) identiques.

7. Dispositif selon la revendication 1, dans lequel les ouvertures de passage (9) aiguisaient du côté supérieur et du côté inférieur de l'élément mélangeur/agitateur (5) en direction vers son centre dans au moins une partie de la section transversale (5).
